# FASCICULE DE BREVET EUROPEEN

(11) **EP 0 690 301 B1**
(45) Date de publication et mention de la délivrance du brevet: **09.12.1998**
(21) Numéro de dépôt: 95401538.4
(22) Date de dépôt: 28.06.1995
(51) Int. Cl.: G01N 1/28

(54) **Procédé de caractérisation non destructif de l'état de surface d'une pièce**
Verfahren zur zerstörungsfreien Kennzeichnung des Oberflächenzustandes eines Werkstücks
Method for non-destructive characterisation of the state of a workpiece surface

(30) Priorité: 30.06.1994 FR 9408058
(43) Date de publication de la demande: 03.01.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Leost, Daniel Louis Laurent, D-91450 Soisy sur Seine (FR)

(56) Documents cités:
- FR-A- 853 567
- FR-A- 2 472 182
- US-A- 4 043 187
- PATENT ABSTRACTS OF JAPAN vol. 8 no. 192 (P-298) [1629] ,4 Septembre 1984 & JP-A-59 079832 (SHOWA DENKO K. K.) 9 Mai 1984,
- PATENT ABSTRACTS OF JAPAN vol. 15 no. 511 (P-1292) ,25 Décembre 1991 & JP-A-03 221831 (MITSUBISHI HEAVY IND LTD) 30 Septembre 1991,
- PATENT ABSTRACTS OF JAPAN vol. 14 no. 434 (P-1107) ,18 Septembre 1990 & JP-A-02 170010 (KAWASAKI STEEL CORP) 29 Juin 1990,
- PATENT ABSTRACTS OF JAPAN vol. 17 no. 338 (P-1564) ,25 Juin 1993 & JP-A-05 045266 (CANON INC) 23 Février 1993,

## Description

L'invention concerne un procédé de caractérisation non destructif de l'état de surface d'une pièce afin de contrôler sa rugosité et de mettre en évidence des éventuels défauts. Le procédé peut s'appliquer en particulier à l'examen de surfaces grenaillées et permet notamment l'observation de zones difficilement accessibles.

Les techniques de grenaillage consistent à bombarder la surface d'une pièce avec des billes d'acier, de verre ou de céramique. Ces techniques sont utilisées notamment dans les applications visant à obtenir des précontraintes de compression superficielle dans le but d'améliorer la tenue en service des pièces ; ceci par un accroissement de la résistance en fatigue ou de la résistance à la corrosion sous contrainte. Les pièces à traiter ayant des formes de plus en plus complexes, il est difficile d'obtenir le degré désiré d'application du grenaillage aux pièces. Pour obtenir une bonne assurance qualité sur des pièces de plus en plus sollicitées, il est donc nécessaire de s'assurer que le degré de grenaillage est suffisant et que le grenaillage s'étend sans interruption sur la totalité de la surface traitée.

Il existe différentes méthodes permettant de vérifier l'état de surface d'une pièce. En particulier, il est connu de contrôler l'état de surface de pièces à partir de l'observation d'empreintes. Chaque empreinte est obtenue en déposant sur la surface à examiner une feuille de film plastique, par exemple d'acétate de cellulose, trempée dans l'acétone de façon à la ramollir pour qu'elle épouse fidèlement les formes de la pièce. Après durcissement, l'empreinte est enlevée et son observation peut être effectuée à la loupe binoculaire, au microscope optique, ou au microscope électronique à balayage. Cette technique est couramment utilisée pour l'examen de surfaces grenaillées, sablées, rectifiées ou usinées car elle permet à la fois de valider des pièces, d'archiver les états de surface au travers des empreintes, et de faire des expertises topographiques. Cependant cette technique est délicate à mettre en oeuvre et inapplicable dans les zones difficilement accessibles. De plus des précautions doivent être prises pour éviter que les empreintes présentent des défauts importants tels que des inclusions d'air. Par ailleurs cette technique présente une difficulté d'application dans le cas de températures ambiantes élevées en raison de l'évaporation rapide de l'acétone. Il est également connu de vérifier l'état de surface d'une pièce en effectuant des relevés dimensionnels permettant d'obtenir une mesure de rugosité ; notamment, dans le domaine de la métrologie, des relevés dimensionnels sont effectués à partir d'empreintes réalisées en utilisant des résines fluides autopolymérisantes à base de méthacrylate de méthyl et faisant partie de la famille des résines acryliques. Ce type de résine ne peut pas être utilisée dans le cas d'un contrôle d'état de surface dans des zones inaccessibles car elle est trop fluide et très adhérente après durcissement ; par ailleurs la précision de détails obtenue avec ce type de résine est insuffisante et contient généralement de nombreuses inclusions d'air.

L'état de surface induit par un grenaillage peut également être vérifié à partir d'éprouvettes technologiques représentatives des pièces soumises au jet de grenaille. Cependant la réalisation des éprouvettes est contraignante au niveau des coûts et ne donne pas une indication exacte de l'état de surface réel des pièces.
le but de l'invention est de pallier les inconvénients des méthodes connues et de proposer une méthode de contrôle de l'état de surface induit par un grenaillage d'une pièce mécanique facile à mettre en oeuvre, ne nécessitant pas l'utilisation d'outillages complexes et onéreux, permettant d'obtenir des informations précises et fidèles et pouvant être utilisée dans des zones difficilement accessibles.
Un autre but de l'invention est de réaliser un procédé de contrôle permettant d'effectuer la validation de pièces mécaniques, pouvant être utilisé pour effectuer des expertises topographiques de grande précision, et permettant d'effectuer des relevés dimensionnels caractéristiques de la rugosité, avec une grande précision.
Pour cela, le procédé consiste à réaliser une empreinte de la zone à examiner en utilisant un produit élastomère sous forme pâteuse et de haute précision à base de silicone présentant une anti-adhérence naturelle, tel que par exemple les pâtes utilisées dans le domaine dentaire. Après durcissement, l'empreinte obtenue est enlevée et examinée. Différents examens sont possibles ; notamment, l'empreinte peut être observée à la loupe binoculaire, et/ou photographiée au microscope optique ou électronique à balayage. L'empreinte peut également être utilisée pour des mesures de rugosité réalisées par exemple au moyen d'un profilomètre laser. Elle est en général exempte d'inclusions d'air.

Pour l'observation à la loupe binoculaire, il est préférable de métalliser préalablement l'empreinte de manière à augmenter le contraste optique. Dans le cas d'un examen au microscope électronique à balayage ou au microscope optique, la métallisation est obligatoire car elle permet de rendre la surface conductrice, ou réfléchissante dans le deuxième cas.

Les empreintes ainsi réalisées selon l'invention à partir des matériaux élastomères à base de silicone peuvent être archivées facilement car elles sont très solides et présentent une excellente résistance au vieillissement naturel. Elles offrent une fidélité de reproduction comparable à celle obtenue à partir d'une empreinte réalisée au moyen d'une feuille de film plastique.
Elles ne présentent aucune nocivité pour les pièces comportant du titane car sa teneur en chlore est faible.

Selon l'invention, le procédé de contrôle non destructif de l'état de surface d'une pièce mécanique est caractérisé en ce qu'il consiste :
- à réaliser une empreinte préliminaire de la surface à contrôler au moyen d'un premier matériau élastomère sous forme pâteuse de manière à obtenir un moule support après durcissement,
- à former un élément d'impression par coulage d'un deuxième matériau élastomère sous forme pâteuse dans le moule support obtenu, ce deuxième matériau élastomère ayant une consistance moyenne permettant une reproduction de détails avec une précision de l'ordre de quelques dixièmes de microns,
- à appliquer l'élément d'impression sur la surface à contrôler de manière à réaliser une empreinte de cette surface,
- à maintenir l'élément d'impression en place pendant une durée prédéterminée, nécessaire à son durcissement,
- à retirer l'empreinte après durcissement.

D'autres particularités et avantages de l'invention apparaîtront clairement dans la suite de la description donnée à titre d'exemple non limitatif et faite en regard des figures annexées qui représentent :
- La figure 1, un schéma synoptique des étapes du procédé, selon l'invention ;
- la figure 2a, une photographie d'une zone d'une éprouvette de grenaillage présentant des manques de recouvrement ; la figure 2b, une photographie d'une empreinte de la même zone de l'éprouvette de grenaillage, selon l'invention;
- la figure 3a, une photographie d'une zone d'une cale étalon comportant des fissures de largeur 0,5 micron ; la figure 3b, une photographie d'une empreinte de la même zone de la cale étalon, selon l'invention.

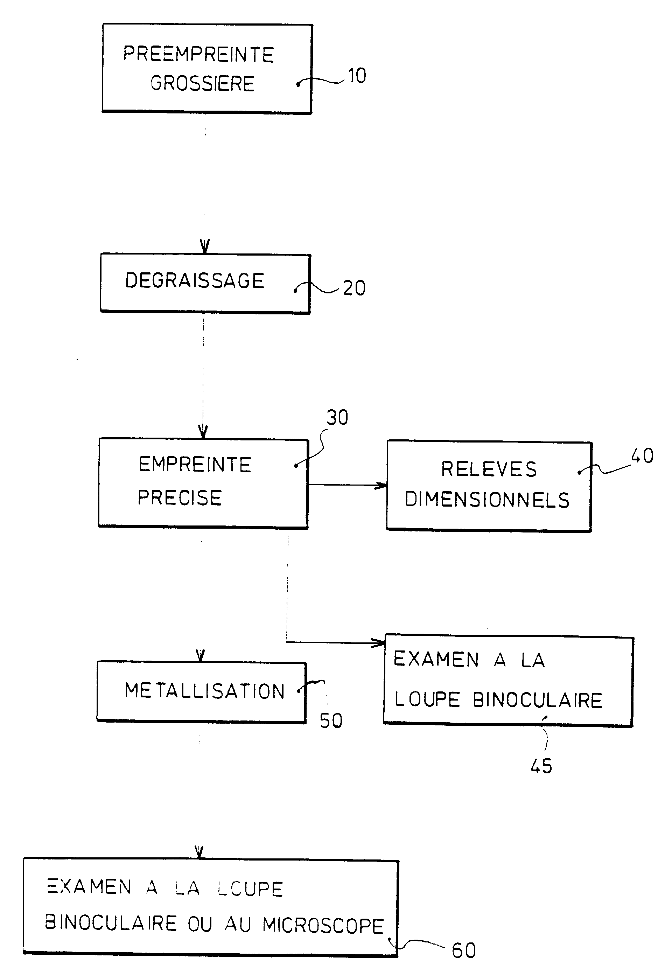

La figure 1 représente un schéma synoptique des étapes du procédé, selon l'invention.
Dans une première étape 10, le procédé consiste à réaliser une empreinte préliminaire de la surface à examiner au moyen d'un premier matériau élastomère sous forme pâteuse de manière à obtenir un moule support après solidification. L'empreinte préliminaire est réalisée grossièrement en utilisant un matériau élastomère de précision moyenne. Ce matériau est maintenu en place pendant le temps nécessaire à son durcissement.
Dans une deuxième étape 20, lorsque l'empreinte préliminaire a été retirée, la surface à reproduire est soigneusement dégraissée à l'acétone pure.

Dans une étape 30, est réalisée une empreinte précise de la surface à examiner. Pour réaliser cette empreinte, le procédé consiste à former un élément d'impression par coulage d'un deuxième matériau élastomère de haute précision dans le moule support obtenu dans l'étape 10, à appliquer l'élément d'impression sur la surface à reproduire, à exercer une légère pression pendant quelques secondes, à maintenir l'élément d'impression en place pendant une durée prédéterminée nécessaire à son durcissement, à retirer l'empreinte.

L'empreinte peut alors être utilisée, dans une étape 40, pour effectuer des relevés dimensionnels d'états de surface au moyen par exemple d'un profilomètre de surface par convergence laser, et/ou dans une étape 45, pour un examen à la loupe binoculaire.
L'empreinte peut également être observée, dans une étape 60, à la loupe binoculaire ou au microscope optique ou au microscope électronique à balayage après avoir été métallisée sous vide dans une étape 50. La métallisation peut être effectuée par exemple dans un évaporateur ou dans un pulvérisateur cathodique. L'épaisseur du dépôt est de l'ordre de quelques centièmes de micron.

A titre d'exemple, les premier et deuxième matériaux élastomères peuvent être choisis dans la famille des silicones chargés par des plastifiants. La consistance de ce type de produit est d'autant plus grande que la quantité de plastifiant ajouté dans le silicone est importante. Pour obtenir une bonne précision de reproduction des détails, la consistance du produit ne doit pas être trop grande. Ainsi, le premier matériau choisi pour réaliser la préempreinte a une consistance plus grande que le deuxième matériau élastomère choisi pour réaliser l'empreinte finale de haute précision.

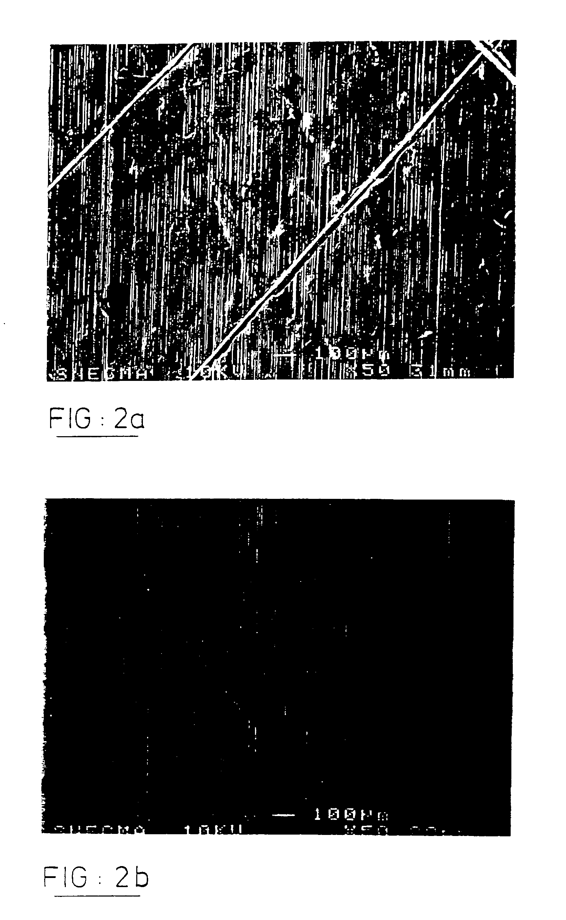

Les figures 2a et 2b représentent respectivement une photographie d'une éprouvette de grenaillage présentant des manques de recouvrement et une photographie d'une empreinte de la même éprouvette de grenaillage.

Les deux photographies ont été réalisées au microscope électronique à balayage avec des grossissements de 50. L'éprouvette de grenaillage comporte des rayures de repérage et des impacts de billes sur des traces d'usinage.

L'empreinte de l'éprouvette a été réalisée en utilisant successivement deux matériaux élastomères constitués d'huile de silicone chargée par des plastifiants, ces matériaux étant déposés sous la marque PROVIL et distribués par la société BAYER. La réalisation de la préempreinte a été effectuée en utilisant le produit PROVIL P SOFT ayant une dureté comprise entre 60 et 70 Shore A ; la réalisation de l'empreinte de haute précision a été effectuée en utilisant le produit PROVIL CD M ayant une dureté comprise entre 50 et 55 Shore A. L'empreinte ainsi réalisée a été ensuite métallisée sous vide par un dépôt d'aluminium pur d'épaisseur de l'ordre de 0,03 micron.
Les images représentées sur les figures 2a et 2b sont inversées l'une par rapport à l'autre ; ceci est dû au fait que la prise d'empreinte a pour effet d'inverser les informations de la surface contrôlée. Sur la figure 2b, le signal électrique a été inversé sur le microscope électronique à balayage, de façon à obtenir, comme pour la figure 2a, une topographie positive de la surface contrôlée.

La photographie en figure 2b réalisée à partir de l'empreinte de la surface de l'éprouvette est en tout point comparable à celle obtenue en figure 2a directement à partir de l'éprouvette.

La photographie 3a représente une photographie d'une zone d'une cale étalon comportant des fissures de largeur 0,5 micron, et la photographie 3b l'empreinte de la même zone de la cale étalon.

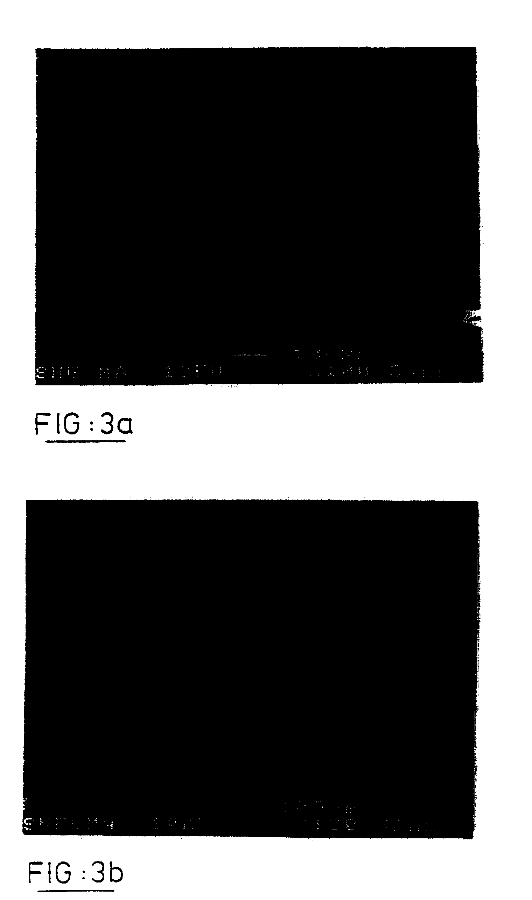

Les photographies ont été réalisées au microscope électronique à balayage à un grossissement de 100. Les fissures présentes sur la cale étalon ont été réalisées par traction de la cale revêtue sur une face d'un dépôt de nickel/chrome d'épaisseur 5 microns à 5% près. La profondeur des fissures est égale à l'épaisseur du dépôt de nickel/Chrome. La photographie obtenue sur la figure 3b à partir de l'empreinte de la cale montre les fissures avec autant de précision que la photographie obtenue sur la figure 3a directement à partir de la cale.
Les fissures ayant une largeur de l'ordre de 0,5 micron cette méthode permet donc de visualiser l'état de surface d'une pièce mécanique avec une précision au moins égale à 0,5 micron.

De même, des mesures de rugosité ont été réalisées sur une cale étalon en verre présentant un état de surface caractérisé par une rugosité moyenne de l'ordre de 0,86 micron.
Les mesures effectuées sur l'empreinte élastomère de la cale étalon de rugosité présentent un écart moyen arithmétique de l'ordre de 4% par rapport aux mesures effectuées sur la cale elle-même. Les résultats ainsi obtenus sont nettement meilleurs que ceux obtenus par des méthodes connues telle que par exemple la méthode de prise d'empreintes au moyen d'une résine fluide de marque déposée TECHNOVIT utilisée notamment en métrologie pour des relevés dimensionnels. En effet l'écart moyen obtenu avec ce type de résine est de l'ordre de 10%.
L'invention n'est pas limitée aux exemples de réalisation précisément décrits, notamment, l'observation des empreintes peut être effectué soit à la loupe binoculaire avant et/ou après métallisation, soit après métallisation au microscope optique ou au microscope électronique à balayage selon les degrés de performance, grossissement et profondeur de champ, souhaités.

Par ailleurs, le dépôt métallique effectué pour l'examen des empreintes n'est pas obligatoirement un dépôt d'aluminium, tout autre type de dépôt métallique peut convenir, tel que par exemple un dépôt d'un alliage d'or et de palladium.

## Revendications

1. Procédé de caractérisation non destructif de l'état de surface d'une pièce, caractérisé en ce qu'il consiste :
- à réaliser une empreinte préliminaire de la surface à contrôler au moyen d'un premier matériau élastomère sous forme pâteuse de manière à obtenir un moule support après durcissement,
- à former un élément d'impression par coulage d'un deuxième matériau élastomère sous forme pâteuse dans le moule support obtenu, ce deuxième matériau élastomère ayant une consistance moyenne permettant une reproduction de détails avec une précision de l'ordre de quelques dixièmes de microns.
- à appliquer l'élément d'impression sur la surface à contrôler de manière à réaliser une empreinte de cette surface.
- à maintenir l'élément d'impression en place pendant une durée prédéterminée nécessaire à son durcissement.
- à retirer l'empreinte après durcissement.

2. Procédé de caractérisation selon la revendication 1, caractérisé en ce qu'il consiste à mesurer la rugosité des empreintes au moyen d'un profilomètre de surface par convergence laser.

3. Procédé de caractérisation selon l'une quelconque des revendications 1 ou 2, caractérisé en ce qu'il consiste à examiner l'empreinte au moyen d'une loupe binoculaire.

4. Procédé de caractérisation selon la revendication 1, caractérisé en ce qu'il consiste en outre à métalliser sous vide les empreintes réalisées par un dépôt métallique d'épaisseur de l'ordre de quelques centièmes de microns et à examiner les empreintes métallisées au moyen d'une loupe binoculaire ou d'un microscope optique ou d'un microscope électronique à balayage.

5. Procédé de caractérisation selon l'une quelconque des revendications précédentes, caractérisé en ce que les matériaux élastomères sont choisis dans la famille des silicones chargés par des plastifiants.

## Patentansprüche

1. Verfahren zur zerstörungsfreien Kennzeichnung des Oberflächenzustands eines Werkstücks, bestehend aus den folgenden Schritten:
- Ausführen eines vorläufigen Abdrucks der zu kontrollierenden Oberfläche mittels eines ersten pastenartigen Elastomer-Materials, um nach dem Härten eine Traggußform zu erhalten,
- Bilden eines Aufdruckelements durch Einbringen eines zweiten pastenartigen Elastomer-Materials in die erhaltene Traggußform, wobei das zweite Elastomer-Material eine mittlere Konsistenz aufweist, die eine Wiedergabe von Details mit einer Präzision in der Größenordnung von einigen Zehntel Mikrometern ermöglicht,
- Andrücken des Aufdruckelements auf die zu kontrollierende Oberfläche, so daß ein Abdruck dieser Oberfläche ausgeführt wird,
- Halten des Aufdruckelements an Ort und Stelle während einer vorbestimmten Zeitdauer, die zu seinem Aushärten notwendig ist, und
- Abnehmen des Abdrucks nach dem Aushärten.

2. Verfahren zur Kennzeichnung nach Anspruch 1,
**dadurch gekennzeichnet**, daß es den Schritt der Messung der Rauhigkeit der Abdrücke mittels eines Oberflächen-Profilometers mittels eines konvergierenden Laserstrahls aufweist.

3. Verfahren zur Kennzeichnung nach Anspruch 1 oder 2,
**dadurch gekennzeichnet**, daß es den Schritt der Überprüfung des Abdrucks mittels einer Binokularlupe aufweist.

4. Verfahren zur Kennzeichnung gemäß Anspruch 1,
**dadurch gekennzeichnet**, daß es weiterhin aufweist den Schritt der Metallisierung der erhaltenen Abdrücke im Vakuum durch eine metallische Ablagerung mit einer Dicke in der Größenordnung von wenigen Hundertsteln Mikrometern und den Schritt der Untersuchung der metallisierten Abdrücke mittels einer Binokularlupe, eines optischen Mikroskops oder eines Rasterelektronen-Mikroskops.

5. Verfahren zur Kennzeichnung gemäß einem der vorhergehenden Ansprüche,
**dadurch gekennzeichnet**, daß die Elastomer-Materialien mit Plastifizierungsmitteln versetzte Silikon-Materialien sind.

## Claims

1. Non-destructive method of characterizing the surface finish of a component, characterized in that it consists:
- in producing a preliminary impression of the surface to be checked by means of a first elastomer material in pasty form so as to obtain a support mould after curing,
- in forming an impressioning element by pouring a second elastomer material in pasty form into the support mould obtained, this second elastomer material having a moderate consistency allowing details to be reproduced with a precision of the order of a few tenths of a micron,
- in applying the imprinting element to the surface to be checked so as to produce an impression of this surface,
- in holding the imprinting element in place for a predetermined time necessary for it to cure, and
- in removing the impression after-curing.

2. Method of characterization according to Claim 1, characterized in that it consists in measuring the roughness of the impressions by means of a surface profilometer using laser convergence.

3. Method of characterization according to either of Claims 1 and 2, characterized in that it consists in examining the impression by means of a binocular magnifier.

4. Method of characterization according to Claim 1, characterized in that it furthermore consists in vacuum-metallizing the impressions produced by a metal coating having a thickness of the order of a few hundredths of a micron and in examining the metallized impressions by means of a binocular magnifier or an optical microscope or a scanning electronic microscope.

5. Method of characterization according to any one of the preceding claims, characterized in that the elastomer materials are chosen from the family of plasticizer-filled silicones.
